# EUROPEAN PATENT SPECIFICATION

(11) **EP 2 479 119 B1**
(45) Date of publication and mention of the grant of the patent: **09.08.2017**
(21) Application number: 10817041.6
(22) Date of filing: 30.08.2010
(51) Int. Cl.: B65D 65/40, B32B 27/20

(54) **MULTI-LAYERED PLASTIC CONTAINER HAVING SUPERIOR APPEARANCE CHARACTERISTICS**
MEHRSCHICHTIGER KUNSTSTOFFBEHÄLTER MIT VERBESSERTEM ERSCHEINUNGSBILD
RÉCIPIENT EN PLASTIQUE MULTICOUCHE À APPARENCE AMÉLIORÉE

(30) Priority: 15.09.2009 JP 2009212908
(43) Date of publication of application: 25.07.2012
(73) Proprietor: Toyo Seikan Kaisha, Ltd., Shinagawa-ku Tokyo 141-8640 (JP)
(72) Inventor: KATOU, Yuuichirou, Yokohama-shi Kanagawa 230-0001 (JP); ISHIKAWA, Masashi, Izumisano-shi Osaka 598-0061 (JP)
(74) Representative: Müller-Boré & Partner Patentanwälte PartG mbB
(86) International application number: PCT/JP2010/064735
(87) International publication number: WO 2011/033928

(56) References cited:
- EP-A1- 1 628 300
- DE-A1- 19 723 417
- JP-A- 2000 264 325
- JP-A- 2006 208 473
- JP-A- 2008 279 732
- JP-A- 2008 279 732
- US-A1- 2002 110 654

## Description

### Technical Field:

This invention relates to a multilayered plastic container and, more specifically, to a multilayered plastic container which exhibits appearance rich in quality when an image is printed on the outer surface thereof.

### Background Art:

Thermoplastic materials have been used in a variety of fields owing to their excellent heat-formability and properties specific to the individual plastic materials, and have, particularly, been much used in the fields of packing. For example, a polyester resin as represented by a polyethylene terephthalate (PET) features excellent heat resistance, transparency, mechanical strength and resistance against being scratched on the surfaces thereof, and has been widely used in the field of containers for containing various beverages, detergents, cosmetics and the like. Moreover, the olefin resins such as polyethylene and polypropylene are inexpensive in addition to their good formability, and have been extensively used for containers for foods, for which low costs are demanded.

A method has been widely employed for producing the plastic containers in multilayered structures to utilize properties of various-kinds of resins. For instance, patent documents 1 and 2 are proposing multilayered plastic containers comprising, from the outer surface side of the containers, an outer layer of a polyester resin, a layer of an adhesive resin and a layer of an olefin resin. These plastic containers are utilizing such properties as excellent mechanical strength of the polyester resin and excellent properties of the olefin resin, i.e., low cost.

Various plastic containers have also been proposed featuring improved appearance characteristics. For example, a patent document 3 proposes a multilayered plastic container in which at least one layer constituting a container wall is blended with an interference color pigment, a patent document 4 proposes a multilayered plastic container in which an intermediate layer of the container wall is blended with a pearl pigment, and a patent document 5 proposes a multilayered plastic container comprising an outer layer of a transparent polyester resin, a layer of a transparent adhesive resin and a layer of a colored polyolefin resin in this order from the outer surface side, the outer layer of the transparent polyester resin having a surface roughness "Ra" of not more than 0.2 *µ*m, and the ruggedness in the interface between the layer of the transparent adhesive resin and the layer of the colored polyolefin resin being not more than 15 *µ*m.

### Prior Art Documents:

### Patent Documents:

Patent document 1: JP-A-6-79842
Patent document 2: JP-A-6-106606
Patent document 3: JP-A-9-11369
Patent document 4: JP-A-8-309836
Patent document 5: WO2008/090655

### Outline of the Invention:

### Problems that the Invention is to Solve:

As will be learned from the above description, there have been proposed a variety of multilayered plastic containers featuring improved appearance characteristics which, however, are pursuing appearance of the containers themselves. At the present, however, not much proposals have been made concerning appearance characteristics of when an image is printed on the outer surfaces of the containers.

According to the container proposed by the patent document 3, for example, the color of the container delicately varies depending upon the angle from which it is looked at. When an image is printed on the outer surface of the container, however, such a variation in the color rather impairs the impression of the printed image or cancels the variation in the color of the container itself. Besides, the printed image appears plainly, and the appearance characteristics are not necessarily improved in a state where the image is printed.

The multilayered plastic containers proposed in the patent documents 4 and 5 are to impart luster to the surfaces. In these containers, too, however, the image printed on the surfaces appears plainly and, further, partly conceals the outer surfaces of the containers. Therefore, it cannot still be said that the appearance characteristics are satisfactory in a state where the image is printed.

It is, therefore, an object of the present invention to provide a multilayered plastic container on which the outer surface can be printed a stereoscopic image to exhibit superior appearance characteristics in a state where the image is printed.

Another object of the present invention is to provide a multilayered plastic container that exhibits appearance of particularly good quality.

### Means for Solving the Problems:

As a result of having keenly studied a multilayered plastic container of a multilayered structure forming a layer of a transparent resin on the outside of a layer of a colored resin, the present inventors have discovered the fact that when an image is printed on the outer surface, the printed image forms a shadow and appears stereoscopically if means is employed which is as very simple as merely increasing the thickness of the layer of the transparent resin, and have thus completed the invention.

Namely, according to the present invention, there is provided a multilayered plastic container having a colored resin layer which is colored by being blended with a pigment, wherein an outer surface side of the colored resin layer is all formed of a transparent resin, and a thickness of a layer of the transparent resin formed on the outer surface side of the colored resin layer is 0.4 to 2.0 mm.

In the multilayered plastic container of the invention, it is desired that:
(1) An image is printed on the outer surface of the layer of the transparent resin;
(2) An inorganic pigment is used as the pigment;
(3) The colored resin layer is colored in a silver color;
(4) The colored resin layer comprises a regrind layer containing a scrap resin and in which a pigment is dispersed, and an innermost layer of a virgin resin is formed on an inner surface side of the colored resin layer; and
(5) The transparent resin layer comprises an outermost layer, an adhesive resin layer and an inner layer.

### Effects of the Invention:

In the multilayered plastic container of the present invention, the layer on the outer surface side of the colored resin layer is all formed of a transparent resin, and a particularly important feature resides in that the thickness of the layer of the transparent resin, i.e., the thickness of the layer from the outer surface of the colored resin layer up to the outer surface of the container is larger than the thickness of a resin layer that usually forms the multilayered container and, concretely, is adjusted to lie in a range of 0.4 to 2.0 mm (specifically, 0.8 to 1.5 mm). That is, with the thickness of the transparent layer on the outside of the colored resin layer being set to lie in the above range, when an image is printed on the outer surface of the container, the shade of the image is reflected on the outer surface of the colored resin layer and is observed as a shadow along the circumferential edges of the printed image. According to the present invention, since the shadow is formed along the circumferential edges of the printed image, the printed image is stereoscopically observed; i.e., deep appearance is exhibited, appearance characteristics are very improved in a state where the image is printed, and superior stereoscopic ornamental effect is realized.

If, for example, the thickness of the transparent layer on the outside of the colored resin layer does not lie in the above range, the shade of the printed image is not formed on the surface of the colored resin layer. As a result, no shadow of the printed image is formed, and the appearance characteristics are not improved in the state where the image is printed.

In the invention, further, it is desired that the colored resin layer in the container is colored in a silver color from such a standpoint that the shadow of the printed image becomes more vivid. Specifically, this embodiment imparts a high quality to the container itself.

### Brief Description of the Drawings:

[Fig. 1] is a view showing a fundamental layer structure of a multilayered plastic container of the invention.
[Fig. 2] is a view of when an image printed on the outer surface of the multilayered plastic container of the invention is viewed.
[Fig. 3] is a view of a preferred layer constitution of the multilayered plastic container of the invention.

### Mode for Carrying Out the Invention:

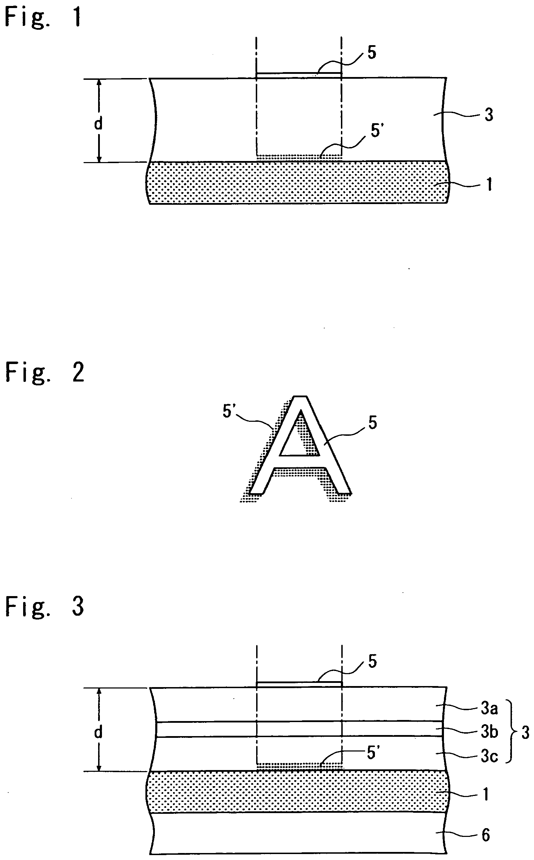

Referring to Fig. 1, the multilayered plastic container of the invention has a fundamental layer structure including a colored resin layer 1 on the inner surface side thereof, the outer surface side of the colored resin layer 1 being formed of a transparent resin. In Fig. 1, the layer formed of the transparent resin is denoted by 3, and an image 5 is printed on the outer surface of the transparent resin layer 3.

In the invention, a distance d between the outer surface of the colored resin layer 1 and the outer surface of the container (corresponds to a thickness of the transparent resin layer 3) is set to lie in a range of 0.4 to 2.0 mm and, specifically, in a range of 0.8 to 1.5 mm. With the distance "d" being set to lie in the above range, the shade 5' of the printed image 5 reflects on the surface of the colored resin layer 1. Upon looking at the printed image 5, therefore, the shade 5' is observed as a shadow along the circumferential edges of the printed image 5 as shown in Fig. 2. As a result, the printed image 5 is stereoscopically observed. If, for example, the distance "d" is smaller than the above range, the shade 5' of the printed image 5 may be formed on the surface of the colored resin layer 1 but does not turn out to be the shadow along the circumferential edges of the printed image 5. If the distance "d" is larger than the above range, on the other hand, the shade 5' of the printed image 5 may not be formed on the surface of the colored resin layer 1 due to the diffraction of light, or may be formed but being blurred to a considerable degree. As a result, no shadow is observed along the circumferential edges of the printed image 5.

In the invention, the colored resin layer 1 is so colored that the inner surface side of the container cannot be seen enabling the shade 5' of the printed image 5 to be vividly formed. Namely, the colored resin layer 1 is a layer of a thermoplastic resin in which a pigment is dispersed. The pigment may be either an organic pigment or an inorganic pigment. From the standpoint of vividly forming the shade 5' by enhancing the concealing power of the colored resin layer 1, however, an inorganic pigment is preferred.

Preferred examples of the inorganic pigment that can be used include pearl pigments such as those obtained by coating the surfaces of thin laminar mica particles with titanium dioxide or iron oxide; metal powder pigments such as aluminum powder, bronze powder, aluminum pigment and silver pigment; glass pigments comprising colored glasses; and coated glasses or metal pigments obtained by coating or depositing the particle surfaces of glasses or metals with silver, aluminum or titanium oxide. When colored by using these pigments, the particles acquire specular surfaces, and the shade of the printed image 5 can be vividly observed due to regular multiple reflection.

To vividly reflect the shadow, further, it is desired that the ruggedness is small on the outer surface of the colored resin layer 1 (i.e., on the interface to the transparent resin layer 3) and that the colored resin layer 1 has a high surface reflection factor. For this purpose, it is desired that the pigment to be added has a small particle size and that the pigment is added at a high concentration but in a range in which it does not impair the formability. For example, it is desired that the pigment that is used has an average particle size (average particle size of long diameters when the particles are not of a spherical shape) of not more than 50 *µ*m and, specifically, in a range of about 0.05 to 20 *µ*m. Desirably, further, the pigment is added, usually, in an amount in a range of about 0.1 to 30 parts by weight and, specifically, 0.5 to 10 parts by weight per 100 parts by weight of the thermoplastic resin that forms the colored resin layer 1. Upon being blended with the pigment having the above average particle size in the above-mentioned amount, the shade 5' is evenly formed and can be vividly recognized from any angle.

There is no particular limitation on the color of the colored resin layer 1 if the shadow formed by the shade 5' of the printed image 5 can be observed, and various colors, except black, can be used depending upon the design of the container. From such a standpoint that the shade 5' can be vividly observed, however, a light color is preferred and, specifically, a silver color is most preferred. This is because as will be understood from the fact that mirrors have a silver color, the image that is reflected in silver color can be most vividly recognized with the naked eye. Preferred examples of the pigment for imparting the silver color will include aluminum pigment, pearl pigment, silver pigment, coated glass and metal pigment among the above-mentioned inorganic pigments.

There is no particular limitation on the thickness of the colored resin layer 1 provided it reflects the shade of the printed image 5 and exhibits light-shielding property preventing the interior of the container from being seen. Usually, however, the thickness thereof is about 0.2 to 2.0 mm.

The transparent resin 3 formed maintaining the above-mentioned thickness "d" should have such a transparency that the shade 5' of the printed image 5 is clearly reflected on the surface of the colored resin layer 1 and can be clearly recognized from the outer side. Usually, the transparent resin layer 3 may have a cloudiness (JIS K7136), i.e., a haze value of not more than 70%, specifically, not more than 60% and, most desirably, not more than 50% when it is measured maintaining a thickness of 2 mm. From the standpoint of so printing the image 5 that the shade 5' thereof can be vividly reflected, further, the transparent resin layer 3 has a smooth outer surface, i.e., a surface roughness Ra (JIS B-0601) of, for example, not more than 0.2 *µ*m, and it is most desired that luster is imparted by the smooth surface.

In the present invention, the colored resin layer 1 and the transparent resin layer 3 are formed by using a thermoplastic resin. As the thermoplastic resin, there is no particular limitation so far as it can be formed, and any known thermoplastic resin can be used as used in the field of packing materials. For example, there can be used olefin resins like low-density polyethylene, high-density polyethylene, polypropylene, poly 1-butene, poly 4-methyl-1-pentene, α-olefin random or block copolymers of ethylene, propylene, 1-butene and 4-methyl-1-pentene, or cyclic olefin copolymers; ethylene/vinyl copolymer resins such as ethylene/vinyl acetate copolymer, ethylene/vinyl alcohol copolymer and ethylene/vinyl chloride copolymer; styrene resins such as polystyrene, acrylonitrile/styrene copolymer, ABS and α-methylstyrene/styrene copolymer; vinyl resins such as polyvinyl chloride, polyvinylidene chloride, vinyl chloride/vinylidene chloride copolymer, methyl polyacrylate and methyl polymethacrylate; amide resins such as nylon 6, nylon 6-6, nylon 6-10, nylon 11 and nylon 12; polyester resins such as polyethylene terephthalate, polybutylene terephthalate and polyethylene naphthalate; polycarbonate; polyphenylene oxide; and biologically degradable resins such as polylactic acid depending upon the properties required for the containers. These thermoplastic resins can be used in one kind or being blended in two or more kinds together. To satisfy various properties required for vividly forming the shadow, suitable resins are selected from the above thermoplastic resins to form the colored resin layer 1 and the transparent resin layer 3.

As a thermoplastic resin for forming the colored resin layer 1, for example, there is preferably used an olefin resin and, specifically, a high-density polyethylene (HDPE) or an α-olefin/propylene block copolymer from the standpoint of dispersion in the pigment, formability and large strength. As the thermoplastic resin for forming the colored resin layer 1, further, there can be also used a scrap resin (regrind resin) stemming from burr that occurs at the time of forming being mixed together with the virgin resin (usually, in an amount of about 10 to 60% by weight of the whole resin component forming the colored resin layer 1). Use of the regrind resin is preferred from the standpoint of saving resources and lowering the cost.

As a thermoplastic resin for forming the transparent resin layer 3, there can be preferably used a polyester resin or an olefin resin having excellent transparency and excellent formability. Among the polyester resins, a highly amorphous copolymerized polyethylene terephthalate (copolymerized PET) is used from the standpoint of satisfying the above-mentioned haze value and forming smooth outer surfaces with little ruggedness. Among the olefin resins, preferred examples are straight-chain low-density polyethylene (specifically, metallocene LLDPE), low-density polyethylene (LDPE), homopolypropylene and random polypropylene.

Examples of the copolymerized PET include diol components other than the ethylene glycol, such as propylene glycol, 1,4-butanediol, neopentyl glycol, 1,6-hexylene glycol, cyclohexane dimethanol, ethylene oxide adduct of bisphenol A, diethylene glycol, and triethylene glycol; and dicarboxylic acid components other than the terephthalic acid, such as isophthalic acid, p-*β*-oxyethoxybenzoic acid, naphthalene 2,6-dicarboxylic acid, diphenoxyethane-4,4'-dicarboxylic acid, 5-sodiumsulfoisophthalic acid, adipic acid, sebacic acid and alkyl ester derivatives thereof. A specifically preferred example is the copolymerized PET containing a diol component other than the ethylene glycol in an amount of 20 to 60 mol% per the whole diol component. Particularly, the copolymerized PET containing the cyclohexanedimethanol in the above amount is best suited for forming the transparent resin layer 3 of the invention.

Here, as described already, it is desired that the ruggedness is small in the interface between the colored resin layer 1 and the transparent resin layer 3 to vividly form the shade 5' of the printed image 5. Here, to decrease the ruggedness in the interface, it is desired that the same kind of resin is used for forming the colored resin layer 1 and the transparent resin layer 3 that forms the interfacial portion relative to the colored resin layer 1. If the interfacial portion exists between different kinds of resins (e.g. , between the polyester resin and the olefin resin), ruggedness increases in the interface between the colored resin layer 1 and the transparent resin layer 3 at the time of extrusion-forming the container because of different melt-flow characteristics of these resins, and the shade 5' may be obscured. By using the same resin, however, the ruggedness can be minimized in the interface, and the shade 5' can be reliably and vividly formed. Therefore, when the colored resin layer 1 is formed by using, for example, an olefin resin (e.g., HDPE or block PP), it is desired that at least the interfacial portion of the transparent resin layer 3 relative to the colored resin layer 1, too, is formed by using the olefin resin.

In the invention, the transparent resin layer 3 can be formed in a single-layer structure using the same resin so far as a predetermined transparency is maintained but can also be formed of a plurality of layers of different resins in order to improve the vividness of shadow 5' of the printed image 5 and to maximize the stereoscopic ornamental effect of the multilayered plastic container of the invention. For example, as the resin for forming the transparent resin layer 3 as will be understood from the above description, it is most desired to use the copolymerized PET since it has excellent transparency, forms a smooth surface having little ruggedness on the outer surface of the transparent resin layer 3 (on the surface on where the image 5 is to be printed), enables the image 5 to be so printed as to form vivid shadow 5' thereof, and exhibits excellent mechanical strength and scratch resistance. As the resin for forming the colored resin layer 1, on the other hand, it is most desired to use the olefin resin. Further, from a standpoint of decreasing the ruggedness in the interface between the colored resin layer 1 and the transparent resin layer 3 to vividly form the shade 5', it is desired that the interfacial portion of the transparent resin layer 3 is formed of the resin same as the resin forming the colored resin layer 1, i.e. , formed of the olefin resin (which is suited for forming the transparent resin layer 3 described above) . Most desirably in the invention, therefore, the outermost layer (outer surface side) of the transparent resin layer 3 is formed by using the copolymerized PET, and the interfacial portion of the transparent resin layer 3 relative to the colored resin layer 1 is formed by using the olefin resin (specifically, metallocene LLDPE or random PP having a high adhesiveness to the resin component, a high transparency and is obtained by using a metallocene catalyst).

In the above case, further, the polyester resin and the olefin resin poorly adhere to each other and, therefore, it is desired to form an adhesive resin layer between the layer (olefin resin layer) of the transparent resin layer 3 on the side of the colored resin layer 1 and the outermost layer (polyester resin layer). The adhesive resin layer is part of the transparent resin layer 3, is transparent as a matter of course, and adheres to both the olefin resin and the polyester resin.

As the transparent resin used for forming the above adhesive resin layer, there can be exemplified amorphous and highly adhesive olefin resins (ethylene/α-olefin copolymer, etc.), acid-modified resins thereof, and various olefin resins modified with an acid. As the acid used as a modifying agent, there can be exemplified unsaturated carboxylic acids such as (meth)acrylic acid, maleic acid, itaconic acid and crotonic acid, as well as anhydrides thereof. The transparent adhesive resin may be blended with a known tackiness-imparting agent such as rosin resin, terpene resin or petroleum resin in order to further improve the adhesiveness.

When the transparent resin layer 3 comprises the inner layer (olefin resin layer), adhesive resin layer and outermost layer (polyester resin layer) as described above, it is desired that the thicknesses of the layers are so set as to effectively exhibit properties required for the layers under a condition in which the total thickness (distance "d") of the layers lies in the above-mentioned range (0.4 to 2.0 mm and, specifically, 0.8 to 1.5 mm) and predetermined transparency is satisfied. For example, the inner layer has a thickness of, desirably, about 0.1 to 2.0 mm so as to minimize the ruggedness in the interface relative to the colored resin layer 1, and the outermost layer has a thickness of at least not less than 0.02 mm so that the outer surface thereof forms a smooth surface having the surface roughness "Ra" as described above. The adhesive resin layer has a thickness of, usually, about 0.02 to 0.2 mm.

In the embodiment of Fig. 1, further, the colored resin layer 1 is serving as the innermost layer, and no resin layer is formed on the inside thereof. From the standpoint of formability, however, it is desired to form an uncolored resin layer (i.e., resin layer blended with no pigment) on the inside thereof. That is, the uncolored resin layer prevents the colored resin layer in which pigment and scrap resin are dispersed from coming in direct contact with the content in the container and, further, works to enhance the junction strength of a pinch portion (that is formed by the heat-melt adhesion of the innermost layers, and becomes the bottom portion of the preform) effectively preventing defective forming such as breakage of preform at the time of blow-forming (direct blow-forming). The uncolored resin layer that becomes the innermost layer is formed of a virgin thermoplastic resin, as a matter of course. Here, it is desired that the thermoplastic resin is the same resin as that of the colored resin layer 1 from the standpoint of adhesiveness to the colored resin layer 1. Concretely, the uncolored resin layer is formed by using an olefin resin, specifically, high-density polyethylene, block PP, random PP or highly adhesive metallocene polyethylene (LLDPE, LDPE) . The innermost layer has a thickness of, usually, about 0.05 to 2.0 mm.

As will be understood from the above description, the layer structure which is particularly desired for the multilayered plastic container of the invention is as shown in Fig. 3.

Namely, in Fig. 3, the transparent resin layer 3 on the colored resin layer 1 comprises an outermost layer 3a, an adhesive resin layer 3b and an inner layer 3c. An innermost layer 6 of an uncolored resin is formed on the inside of the colored resin layer 1. In this preferred layer constitution, described below are examples of combining the resins for forming the layers.

### <Preferred example (1)>

Transparent resin layer 3 (from the outer surface side of the container):
   Outermost layer 3a: polyester resin layer (specifically, copolymerized PET).
   Adhesive resin layer 3b: the one exemplified above.
   Inner layer 3c: olefin resin, specifically, metallocene LLDPE.
Colored resin layer 1:
   Layer (contains scrap resin) of an olefin resin (specifically, HDPE) in which an inorganic pigment (specifically, a metal powder pigment) is dispersed.
Innermost layer 6:
   Uncolored olefin resin (specifically, HDPE).

### <Preferred example (2)>

Transparent resin layer 3 (from the outer surface side of the container):
   Outermost layer 3a: polyester resin layer (specifically, copolymerized PET).
   Adhesive resin layer 3b: the one exemplified above.
   Inner layer 3c: olefin resin, specifically, random PP.
Colored resin layer 1:
   Layer (contains scrap resin) of an olefin resin (specifically, block PP) in which an inorganic pigment (specifically, a metal powder pigment) is dispersed.
Innermost layer 6:
   Olefin resin, specifically block PP.

The above resin layers can be blended with various additives that have been known per se., such as inorganic filler, plasticizer, antioxidant, antistatic agent, photo stabilizer, anti-blocking agent, lubricant, etc. in a range in which they do not impair the object of the invention.

The plastic container of the invention is so produced that a preform is firstly formed by using the resins or the resin compositions corresponding to the above resin layers through coextrusion-forming with extruders or injector-forming with injection molding machines corresponding to the number of the resin layers, then, the preform is subjected to the secondary forming to be formed into a container form and, finally, a predetermined image 5 is printed on the outer surface of the container. Further, a multilayered film formed by the coextrusion forming may be cut and formed into a bag to produce a bag-like container (pouch).

Further, when the resins of different kinds are used for forming the colored resin layer 1 and the transparent resin layer. 3, it is desired to use the resins of grades of which the melt flow rates are close to each other so that no ruggedness is formed in the interface between the colored resin layer 1 and the transparent resin layer 3.

Further, the shape of the preform and the means of the secondary forming differ depending upon the shape of the container. When it is attempted to produce the container of the shape of, for example, a bottle, the preform is formed in a cylindrical shape (parison), and one end portion thereof is held by using a suitable jig. Next, the preform is heat-melt-adhered (pinched off) and is, thereafter, secondarily formed by blow-forming (direct blow) by blowing the compressed air therein to obtain the container of the shape of the bottle. To produce the container of the shape of a cup, the preform is formed in the shape of a sheet which is then secondarily formed relying on the plug-assist forming to obtain the container of the shape of the cup.

When the secondary forming is to be conducted, it is desired that the metal mold for the secondary forming is specular-finished to adjust the surface roughness "Ra" (JIS B-0601) to be 0.2 to 0.8 *µ*m. By using the specular-finished metal mold, the surface of the transparent resin layer 3 that becomes the outermost surface of the container can be smoothly formed to possess the surface roughness "Ra" of not more than 0.2 *µ*m; i.e., the outer surface of the container becomes a lustrous surface which is excellently suited for being printed.

The image 5 can be printed by means known per se., such as screen printing, gravure printing, flexo printing, or offset printing. Among them, however, the screen printing is preferred from the standpoint of thickly printing the image 5 by using a printing ink (increasing the pigment concentration in the printed image) so that the shade 5' is vividly formed on the surface of the colored resin layer 1.

The thus obtained plastic container of the invention is very favorably suited for being printed. When various characters, figures or marks are printed on the outer surface, the shadow thereof is clearly reflected along the circumferential edges of the printed images exhibiting stereoscopic and deep appearance of images.

The plastic containers of the invention can be realized in the shapes of bottles, cups and bags, and can be put to use for containing a variety of contents. Among them, the container of which the colored resin layer 1 is tinted in a silver color enables the shadow of the printed image 5 to appear very vividly maintaining high quality, and is very suited as a container of the shape of a bottle for containing cosmetics, shampoos, rinses, and the like.

### EXAMPLES

Described below are examples of superior effects of the present invention.

In the following examples, the containers (bottles) that were produced were evaluated by evaluating the stereoscopic appearance of the printed image by a method described below.

### <Evaluating the stereoscopic appearance of the printed image>

The image printed on the outer surface of the obtained bottle was irradiated on the front surface thereof with light from a fluorescent lamp, was viewed with the eye at an angle of 45 degrees with respect to the front surface of the bottle, and the stereoscopic appearance of the printed image was evaluated on the following basis.
○: The shade of the printed image was seen clearly and stereoscopically.
△ : The shade of the printed image was seen fairly stereoscopically.
X: The shade of the printed image was not seen stereoscopically.
(○ and △ represent permissible ranges)

### <Example 1>

A bottle having the layer structure shown in Fig. 3 was formed by using the following resins for forming the layers. Transparent resin layer (outermost layer) 3a:
Transparent polyester resin which was an amorphous copolymerized PET (Eastman PETG DryStar 0601, haze: 0.3%)
Transparent resin layer (adhesive resin layer) 3b:
   A resin obtained by mixing 0.02% by weight of a lubricant (Exceflow EX-LD produced by Toyo Ink Co.) into a polyethylene adhesive resin (Modic F512A produced by Mitsubishi Kagaku Co.) which was an adhesive LDPE having an MFR of 1.5 g/10 min.(JIS K7210, 190°C).
Transparent resin layer (inner layer) 3c:
   Metallocene LLDPE resin (SP1020 produced by Prime Polymer Co., haze: 44%) having an MFR of 2.1 g/10 min. (JIS K7210, 210°C).
Colored resin layer 1:
   A resin obtained by mixing an aluminum pigment (average particle size of 5 *µ*m) at a ratio of 2% by weight into an HDPE resin (6008B produced by Prime Polymer Co.) having an MFR of 0.36 g/10 min. (JIS K7210, 210°C) (average particle size of the pigment was an arithmetic mean value measured from a microphotograph thereof).
Innermost layer (uncolored resin layer) 6:
   An HDPE resin (6008B produced by Prime Polymer Co.) having an MFR of 0.36 g/10 min. IJIS K7210, 210°C).

Namely, the transparent polyester resin for forming the transparent resin layer 3a was extruded through an extruder A (*φ* 40), the polyethylene adhesive resin for forming the transparent resin layer 3b was extruded through an extruder B (*φ* 40) , the metallocene LLDPE resin for forming the transparent resin layer 3c was extruded through an extruder C (*φ* 50), the aluminum pigment-containing HDPE resin for forming the colored resin layer 1 was extruded through an extruder D (*φ* 40), and the HDPE resin for forming the innermost layer 6 was extruded through an extruder E (*φ* 40) being plasticized and kneaded, and a multilayered parison of the layer structure shown in Fig. 3 was formed by using a multilayer head. The multilayered parison was held by a metal mold having a cavity, and the compressed air was blown therein to form a five-kind-five-layered cylindrical bottle having a bottle height of 153 mm, a body diameter of 49 mm and a full-filled capacity of 200 ml.

Thereafter, an image was printed on the outer surface of the bottle side wall by screen printing using a white ink containing 35% by weight of a titanium oxide pigment. The image of "TOKAN" was printed laterally. The obtained bottle was evaluated for its "stereoscopic appearance of the printed image". The kinds of the resins in the obtained container body portion, average thicknesses of the layers of the printed portion and the evaluated results were as shown in Table 1.

### <Example 2>

A cylindrical bottle was formed in the same manner as in Example 1 but setting the thickness of the side wall of the transparent resin layer 3c to be 0.2 mm and setting the total thickness of the transparent resin layer 3 to be 0.4 mm. The image was printed thereon and was evaluated.

The kinds of the resins in the obtained container body portion, average thicknesses of the layers of the printed portion and the evaluated results were as shown in Table 1.

### <Example 3>

A cylindrical bottle was formed in the same manner as in Example 1 but setting the thickness of the side wall of the transparent resin layer 3c to be 1.8 mm, setting the total thickness of the transparent resin layer 3 to be 2.0 mm, setting the thickness of the side of the colored resin layer 1 to be 1. 6 mm and setting the thickness of the side wall of the innermost layer 6 to be 0.4 mm. The image was printed thereon and was evaluated.

The kinds of the resins in the obtained container body portion, average thicknesses of the layers of the printed portion and the evaluated results were as shown in Table 1.

### <Example 4>

A cylindrical bottle was formed in the same manner as in Example 1 but changing the colored resin layer 1 into the HDPE in which a pearl pigment (average particle size of 15 *µ*m) was mixed at a ratio of 1.5% by weight. The image was printed thereon and was evaluated.

The kinds of the resins in the obtained container body portion, average thicknesses of the layers of the printed portion and the evaluated results were as shown in Table 1.

### <Example 5>

A cylindrical bottle was formed in the same manner as in Example 1 but changing the colored resin layer 1 into the HDPE in which a glass pigment (average particle size of 20 *µ*m) colored by depositing silver thereon was mixed at a ratio of 2% by weight. The image was printed thereon and was evaluated.

The kinds of the resins in the obtained container body portion, average thicknesses of the layers of the printed portion and the evaluated results were as shown in Table 1.

### <Example 6>

A cylindrical bottle was formed in the same manner as in Example 1 but changing the transparent resin layer 3c into the random PP resin (B251VT, haze: 15%, produced by Primer Polymer Co.) and changing the colored resin layer 1 and the innermost layer 6 into the block PP resin (B511QA produced by Prime Polymer Co.). The image was printed thereon and was evaluated.

The kinds of the resins in the obtained container body portion, average thicknesses of the layers of the printed portion and the evaluated results were as shown in Table 1.

### <Example 7>

A cylindrical bottle was formed in the same manner as in Example 6 but changing the transparent resin layers 3a, 3b and 3c into a single layer (thickness of 1. 1 mm) formed of the random PP resin (B251VT produced by Prime Polymer Co.). The image was printed thereon and was evaluated.

The kinds of the resins in the obtained container body portion, average thicknesses of the layers of the printed portion and the evaluated results were as shown in Table 1.

### <Comparative Example 1>

A cylindrical bottle was formed in the same manner as in Example 1 but setting the thickness of the side wall of the transparent resin layer 3c to be 0.1 mm and setting the total thickness of the transparent resin layer 3 to be 0.3 mm. The image was printed thereon and was evaluated.

The kinds of the resins in the obtained container body portion, average thicknesses of the layers of the printed portion and the evaluated results were as shown in Table 1.

**Table 1**

| | Resin | | | | | | | Evaluation |
|---|---|---|---|---|---|---|---|---|
| | Transp. Layer 3a (mm) | Transp. Layer 3b (mm) | Transp. Layer 3c (mm) | Transp. layer thickness (mm) | Colored layer 1 (mm) | Colored layer 1 pigment (%) | Innermost layer 6 (mm) | Stereoscopic appearance |
| Ex. 1 | A (0.1) | B (0.1) | E (0.9) | 1.1 | K (0.7) | M (2) | K (0.2) | ○ |
| Ex. 2 | A (0.1) | B (0.1) | E (0.2) | 0.4 | K (0.7) | M (2) | K (0.2) | △ |
| Ex. 3 | A (0.1) | B (0.1) | E (1.8) | 2.0 | K (1.6) | M (2) | K (0.4) | ○ |
| Ex. 4 | A (0.1) | B (0.1) | E (0.9) | 1.1 | K (0.7) | N (1.5) | K (0.2) | ○ |
| Ex. 5 | A (0.1) | B (0.1) | E (0.9) | 1.1 | K (0.7) | P (2) | K (0.2) | ○ |
| Ex. 6 | A (0.1) | B (0.1) | F (0.9) | 1.1 | L (0.7) | M (2) | L (0.2) | ○ |
| Ex. 7 | | F (1.1) | | 1.1 | L (0.7) | M (2) | L (0.2) | Δ |
| Comp. Ex. 1 | A (0.1) | B (0.1) | E (0.1) | 0.3 | K (0.7) | M (2) | K (0.2) | × |

| | | | | | | | | |
|---|---|---|---|---|---|---|---|---|
| ① Resin A: amorphous PET(PET G) ② Resin B: adhesive LDPE ③ Resin E: metallocene LLDPE ④ Resin F: random PP ⑤ Resin K: HDPE ⑥ Resin L: block PP ⑦ Pigment M: aluminum ⑧ Pigment N: pearl ⑨ Pigment P: colored glass | | | | | | | | |

### Description of Reference Numerals:

1: colored resin layer
3: transparent resin layer
5: printed image
5': shade of the printed image

## Claims

1. A multilayered plastic container having the shape of a bottle and having a colored resin layer which is colored by being blended with a pigment, wherein an outer surface side of said colored resin layer is all formed of a transparent resin, and a thickness of a layer of said transparent resin formed on the outer surface side of said colored resin layer is 0.4 to 2.0 mm,
wherein an image is printed on the outer surface of the layer of said transparent resin,
the transparent resin layer has a surface roughness Ra (JIS B-0601) of not more than 0.2 µm,
the transparent resin layer is formed from copolymerized PET, and
the colored resin layer prevents the interior of the container from being seen.

2. The multilayered plastic container according to claim 1, wherein an inorganic pigment is used as said pigment.

3. The multilayered plastic container according to claim 1, wherein said colored resin layer is colored in a silver color.

4. The multilayered plastic container according to claim 1, wherein said colored resin layer comprises a regrind layer containing a scrap resin and in which a pigment is dispersed, and an innermost layer of a virgin resin is formed on an inner surface side of said colored resin layer.

5. The multilayered plastic container according to claim 1, wherein said transparent resin layer comprises an outermost layer, an adhesive resin layer and an inner layer.

## Patentansprüche

1. Mehrschichtiger Plastikbehälter mit der Form einer Flasche und mit einer farbigen Harzschicht, welche dadurch gefärbt ist, dass sie mit einem Pigment vermengt ist, wobei eine äußere Oberflächenseite der farbigen Harzschicht vollständig aus einem transparenten Harz gebildet ist und eine Dicke einer auf der äußeren Oberflächenseite der farbigen Harzschicht gebildeten Schicht des transparenten Harzes 0,4 bis 2,0 mm beträgt,
wobei auf die äußere Oberfläche der Schicht des transparenten Harzes ein Bild gedruckt ist,
die transparente Harzschicht eine Oberflächenrauigkeit Ra (JIS B-0601) von nicht mehr als 0,2 µm aufweist,
die transparente Harzschicht aus copolymerisiertem PET gebildet ist und
die farbige Harzschicht verhindert, dass das Innere des Behälters gesehen wird.

2. Mehrschichtiger Plastikbehälter nach Anspruch 1, wobei ein anorganisches Pigment als das Pigment verwendet wird.

3. Mehrschichtiger Plastikbehälter nach Anspruch 1, wobei die farbige Harzschicht in silberner Farbe gefärbt ist.

4. Mehrschichtiger Plastikbehälter nach Anspruch 1, wobei die farbige Harzschicht eine Wiederaufbereitungsschicht umfasst, welche ein Abfallharz enthält und worin ein Pigment dispergiert ist, und eine innerste Schicht aus einem neu hergestellten Harz auf einer inneren Oberflächenseite der farbigen Harzschicht gebildet ist.

5. Mehrschichtiger Plastikbehälter nach Anspruch 1, wobei die transparente Harzschicht eine äußerste Schicht, eine Haftmittelharzschicht und eine innere Schicht umfasst.

## Revendications

1. Récipient en plastique multicouche ayant la forme d'une bouteille et comportant une couche de résine colorée, qui est colorée en étant mélangé avec un pigment, où une surface extérieure de ladite couche de résine colorée est entièrement formée d'une couche de résine transparente, et une épaisseur d'une couche de ladite résine transparente formée sur la surface extérieure de ladite couche de résine colorée se situe dans l'intervalle allant de 0,4 à 2,0 mm,
où une image est imprimée sur la surface extérieure de la couche de ladite résine transparente,
la couche de résine transparente a une rugosité de surface Ra (JIS B-0601) non supérieure à 0,2 µm,
la couche de résine transparente est formée à partir de PET copolymérisé, et
la couche de résine colorée empêche de voir l'intérieur du récipient.

2. Récipient en plastique multicouche selon la revendication 1, où un pigment inorgarlique est utilisé comme pigment.

3. Récipient en plastique multicouche selon la revendication 1, où ladite couche de résine colorée est colorée en une couleur argentée.

4. Récipient en plastique multicouche selon la revendication 1, où ladite couche de résine colorée comprend une couche de matériau rebroyé contenant des déchets de résine et dans laquelle est dispersé le pigment, et une couche plus interne d'une résine vierge formée sur la surface intérieure de ladite couche de résine colorée.

5. Récipient en plastique multicouche selon la revendication 1, où ladite couche de résine transparente comprend une couche plus extérieure, une couche de résine adhésive et une couche intérieure.
